# FASCICULE DE BREVET EUROPEEN

(11) **EP 1 386 657 B1**
(45) Date de publication et mention de la délivrance du brevet: **04.01.2006**
(21) Numéro de dépôt: 03354066.7
(22) Date de dépôt: 17.07.2003
(51) Int. Cl.: B01F 13/00

(54) **Dispositif d'injection et de mélange de micro-gouttes liquides**
Vorrichtung zum Einspritzen und Mischen von flüssigen Mikrotröpfchen
Apparatus for the injection and mixing of liquid microdroplets

(30) Priorité: 01.08.2002 FR 0209822
(43) Date de publication de la demande: 04.02.2004
(73) Titulaire: COMMISSARIAT A L'ENERGIE ATOMIQUE, 75752 Paris Cédex 15 (FR)
(72) Inventeur: Fouillet, Yves, 38340 Voreppe (FR); Achard, Jean-Luc Immeuble "Le Brasilia", 38100 Grenoble (FR); Fuchs, Olivier, F-3800 Grenoble (FR)
(74) Mandataire: Hecké, Gérard

(56) Documents cités:
- US-A- 4 659 677
- US-A1- 2001 041 357
- CHERVENIVANOVA, E.: "on the deformation of two droplets in a quasisteady stokes flow" INT. J. MULTIPHASE FLOW, vol. 11, no. 5, 1985, pages 721-738, XP008015746
- TORKKELI, A. ET AL: "droplet manipulation on a superhydrophobic surface for microchemical analysis" TRANSDUCERS '01 EUROSENSORS XV, - 14 juin 2001 (2001-06-14) XP002236824 munich

## Description

### Domaine technique de l'invention

L'invention concerne un dispositif d'injection et de mélange de micro-gouttes liquides, comportant des moyens pour mélanger une seconde goutte avec une première goutte déposée sur une couche électriquement isolante d'un support d'analyse.

### État de la technique

De nombreux domaines comme la biologie, la chimie ou l'optique, et notamment les laboratoires sur puce ou labopuces, nécessitent de préparer et de traiter un grand nombre d'échantillons et de les analyser, ce qui nécessite de faire circuler et de manipuler des liquides en faible quantité. La microfluidique permet, par exemple, de faire circuler des petits volumes de liquide dans des canaux micro-usinés. Une autre approche consiste à manipuler des petites gouttelettes de liquide et de les faire fusionner, afin, par exemple de mélanger deux réactifs différents. Il est également possible d'analyser les gouttés résultant de cette fusion.

Il existe de très nombreuses méthodes pour manipuler des gouttes de liquide, en particulier avec des forces électrostatiques. Ainsi l'article « Electrowetting-based actuation of liquid droplets for microfluidic applications » de M.G. Pollack et al. (Applied Physics Letters, vol 77, p1725-1726, 2000) décrit une méthode électrostatique pour déplacer des gouttelettes, basée sur le phénomène d'électromouillage, permettant de contrôler électriquement la tension de surface des gouttelettes et de les déplacer avec des tensions pouvant atteindre 120 Volts. Les gouttelettes sont placées entre deux plans contenant des électrodes recouvertes d'une couche électriquement isolante, rendue hydrophobe par un dépôt de polymère fluoré de type Téflon® de faible épaisseur. Elles peuvent être injectées entre les deux plans par des capillaires collés.

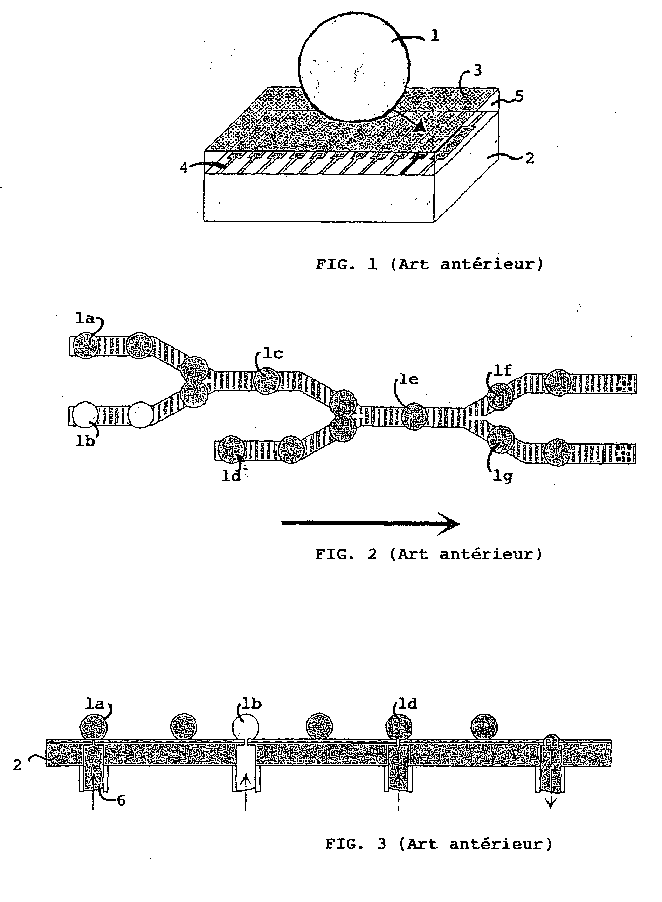

L'article « Droplets manipulation on a superhydrophobic surface for microchemical analysis de A.Torkkeli et al. (Transducers'01 Eurosensors XV, 10-14 juin 2001) décrit un système ouvert, la goutte 1 étant déposée directement sur la surface hydrophobe 3 d'une plaque 2 (figure 1). Plusieurs électrodes 4 parallèles recouvertes d'une couche isolante 5 sont placées sur la plaque 2, engendrant des forces électrostatiques, qui déplacent horizontalement la goutte 1, d'une électrode à une autre selon la direction indiquée par la flèche sur la figure 2. Des gouttes 1a et 1b peuvent être mélangées lorsque leurs chemins de transport se rencontrent (figure 2), formant ainsi une goutte 1c. La goutte 1c peut à nouveau rencontrer une goutte 1d pour former une goutte 1e qui est séparée en deux gouttes 1f et 1g destinées à être analysées. Les gouttes sont déposées sur la surface 3 par pompage à travers des orifices 6 formés dans la plaque 2 (figure 3). Il y a alors des risques de contamination biologique des orifices 6.

La demande de brevet US-A-2001041357 décrit un dispositif permettant de mélanger des secondes gouttes avec des premières gouttes disposées sur un support muni d'un revêtement huileux, en contrôlant la température de réaction entre les premières et secondes gouttes. Le mélange est obtenu par une série d'injecteurs formant, par leur orifice de sortie, les secondes gouttes au-dessus des premières gouttes . Le dispositif comporte également, sous le support, des moyens pour contrôler la température de réaction.

### Objet de l'invention

L'invention a pour but un dispositif d'injection et de mélange de micro-gouttes, évitant la contamination biologique des moyens d'injection, tout en maîtrisant les volumes de gouttes injectés et mélangés et en évitant l'évaporation des gouttes pendant la durée du processus d'injection et de mélange, qui doit être reproductible, mais également pendant la durée du processus d'analyse.

Selon l'invention, ce but est atteint par la revendication 1 et ses revendications dépendants.

Plus particulièrement, ce but est atteint par le fait qu'un liquide visqueux dans lequel les première et seconde gouttes ne sont pas miscibles, est déposé sur la couche électriquement isolante du support d'analyse et que le dispositif comporte au moins un injecteur destiné à former, à un orifice de sortie, la seconde goutte au-dessus de la première goutte, le dispositif comportant des moyens de contrôle d'une tension appliquée entre une première électrode, disposée sous la couche électriquement isolante du support d'analyse, au-dessous de la première goutte, et une seconde électrode disposée à proximité de l'orifice de sortie de l'injecteur.

Selon un développement de l'invention, la couche électriquement isolante du support d'analyse est disposée sur un support électriquement isolant muni d'une zone électriquement conductrice formant la première électrode.

L'invention a aussi pour but le mélange du contenu de la goutte résultante.

Ce but est notamment atteint par le fait que les moyens de contrôle comportent des moyens pour placer les première et seconde électrodes au même potentiel pendant la formation de la seconde goutte par l'injecteur, et des moyens pour appliquer, après formation de la seconde goutte, une première impulsion de tension entre les première et seconde électrodes, pendant une première période de l'ordre de quelques millisecondes à une seconde.

Selon une autre caractéristique de l'invention, les moyens de contrôle comportent des moyens pour appliquer une seconde impulsion de tension entre les première et seconde électrodes, pendant une seconde période de temps de l'ordre de quelques millisecondes à quelques secondes suivant la première impulsion.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1, 2 et 3 représentent un dispositif de déplacement et de mélange de micro-gouttes selon l'art antérieur.
La figure 4 est une représentation schématique d'un mode de réalisation d'un dispositif d'injection et de mélange.
La figure 5 représente le rapprochement de deux gouttes dans un milieu liquide visqueux selon l'art antérieur.
La figure 6 est une représentation schématique d'un premier mode de réalisation d'un dispositif d'injection et de mélange selon l'invention.
Les figures 7 et 8 représentent respectivement l'évolution temporelle d'un premier et d'un second processus de mélange utilisant le dispositif selon la figure 6.
Les figures 9 à 14 représentent schématiquement divers modes de réalisation d'un dispositif d'injection et de mélange selon l'invention.

### Description de modes particuliers de réalisation.

L'invention consiste à faire coalescer des micro-gouttes, de quelques nanolitres à quelques microlitres sur un support d'analyse. La taille des gouttes étant relativement petite, il est nécessaire d'éviter l'évaporation des gouttelettes pendant la durée du processus d'injection et de mélange, mais également pendant la durée du processus d'analyse. Pour cela, le processus d'injection et de mélange des micro-gouttes peut avoir lieu dans un milieu liquide visqueux dans lequel les micro-gouttes ne sont pas miscibles. Le liquide visqueux peut, par exemple, être de l'huile, tandis que les micro-gouttes peuvent être formées par des solutions aqueuses.

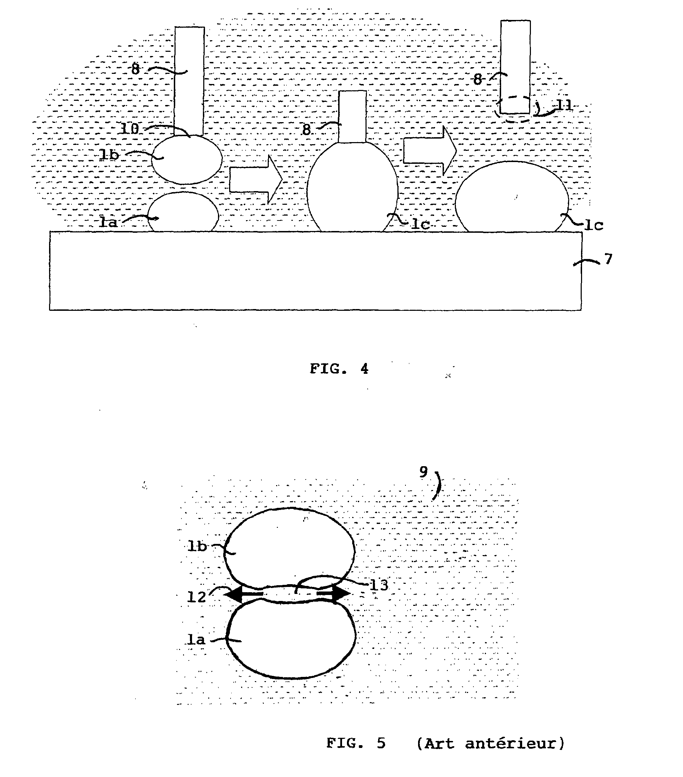

Cependant le risque de contamination biologique lors de l'injection de gouttes est maximal si l'on injecte simplement une goutte 1b dans une goutte 1a pour former une goutte 1c, comme représenté à la figure 4. En effet, dans ce cas, une première goutte 1a est déposée sur un support d'analyse 7. Un injecteur 8 forme, par un orifice de sortie 10, une seconde goutte 1b au-dessus de la première goutte 1a, de manière à faire coalescer la seconde goutte 1b avec la première goutte 1a pour former une troisième goutte 1c. Si l'orifice de sortie 10 de l'injecteur est proche de la première goutte 1a, la troisième goutte 1c peut rester en contact avec l'orifice de sortie 10 de l'injecteur 8, après le phénomène de coalescence des première et seconde gouttes 1a et 1b. L'orifice de sortie 10 risque alors de contenir des résidus 11 de la première goutte 1a et donc d'être contaminé, ce qui risque de contaminer d'autres gouttes lorsque l'injecteur formera d'autres secondes gouttes 1b, destinées à être mélangées avec d'autres premières gouttes 1a.

Selon l'article « On the deformation of two droplets in a quasisteady Stokes flow » de E. Chervenivanova et al. (Int. J. Multiphase Flow, Vol 11, n°5, p721-738, 1985), le rapprochement de deux gouttes 1a et 1b dans un milieu liquide visqueux 9 entraîne un écoulement de drainage 12 du milieu liquide visqueux 9 entre les deux gouttes (figure 5). L'écoulement de drainage 12 est généralement trop lent par rapport au temps de rapprochement des gouttes 1a et 1b d'origine mécanique ou gravitaire et qui, en conséquent, se déforment. Il apparaît alors une fossette 13. Ce mécanisme s'oppose momentanément à la coalescence des gouttes pendant toute la durée du drainage. Le drainage est d'autant plus long que le milieu liquide 9 est visqueux. Le temps de drainage varie donc de façon importante et peut atteindre une durée supérieure à une minute, rendant le processus de coalescence peu reproductible.

L'utilisation d'injecteurs connus ne permet pas d'écarter les inconvénients décrits ci-dessus. Par exemple, les injecteurs utilisant les méthodes dites « électro-spray », qui permettent d'éjecter de très petites gouttelettes d'une buse grâce aux forces électrostatiques, ne peuvent pas être appliquées dans un milieu liquide ayant une viscosité non négligeable.

Par contre, le dispositif d'injection et de mélange de micro-gouttes liquides selon l'invention permet notamment :
- d'effectuer le mélange de réactifs par coalescence de deux gouttes dans un milieu liquide relativement visqueux,
- de ne pas contaminer l'orifice de sortie de l'injecteur par le réactif formant la première goutte 1a,
- de contrôler le volume de la seconde goutte émise par l'injecteur,
- et de réaliser un processus d'injection et de mélange reproductible.

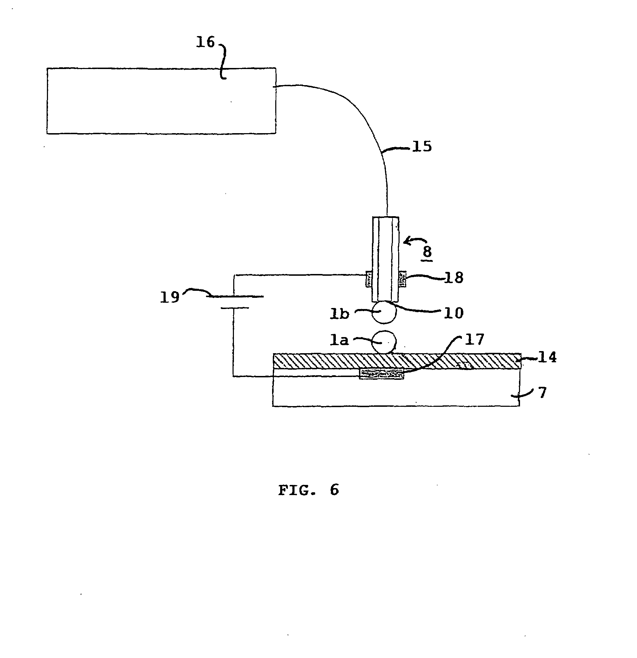

Selon un premier mode de réalisation, représenté sur la figure 6, le dispositif d'injection et de mélange comporte un support d'analyse 7 comportant une couche électriquement isolante 14 sur laquelle est déposée une première goutte 1a. Un injecteur 8 destiné à former, par un orifice de sortie 10, une seconde goutte 1b, est connecté à une première extrémité d'un tube capillaire 15, la seconde extrémité étant reliée à une pompe volumétrique 16, contenant le réactif constituant la seconde goutte 1b. L'injecteur 8 est disposé au-dessus de la première goutte 1a, de manière à faire coalescer la seconde goutte 1b avec la première goutte 1a.

Un liquide visqueux est préalablement déposé sur la couche électriquement isolante 14 du support d'analyse 7, de manière à éviter l'évaporation des gouttes 1a et 1b lors du processus d'injection, de mélange et d'analyse, les première et seconde gouttes 1a et 1b étant non miscibles dans le liquide visqueux. Les gouttes sont, par exemple, des solutions aqueuses, tandis que le liquide visqueux est de l'huile ou un liquide organique. La première goutte 1a est disposée sur la couche électriquement isolante 14 par tout moyen approprié, qui peut être, par exemple, un capillaire ou un injecteur du type de l'injecteur 8.

Le phénomène de coalescence des gouttes est favorisé par des forces électrostatiques engendrées par une première et une seconde électrodes 17 et 18, reliées à un générateur de tension 19. La première électrode 17 est disposée sous la couche électriquement isolante 14 du support d'analyse 7, de manière à être placée au-dessous de la première goutte 1a. La seconde électrode 18 est disposée à proximité de l'orifice de sortie de l'injecteur, de manière à être à proximité de la seconde goutte 1b. Sur la figure 6, la seconde électrode 18 est constituée par un matériau conducteur entourant une partie des parois de l'injecteur 8.

La pompe volumétrique permet de contrôler la formation de la seconde goutte 1b à l'orifice de sortie 10 de l'injecteur 8, les deux électrodes étant placées au même potentiel pendant la formation de la seconde goutte 1b. Une première impulsion de tension est ensuite appliquée entre les première et seconde électrodes 17 et 18, pendant une durée de temps prédéterminée, de l'ordre de quelques millisecondes à une seconde par exemple. La tension peut être continue ou alternative à haute fréquence, et est de l'ordre de quelques dizaines à quelques centaines de Volts.

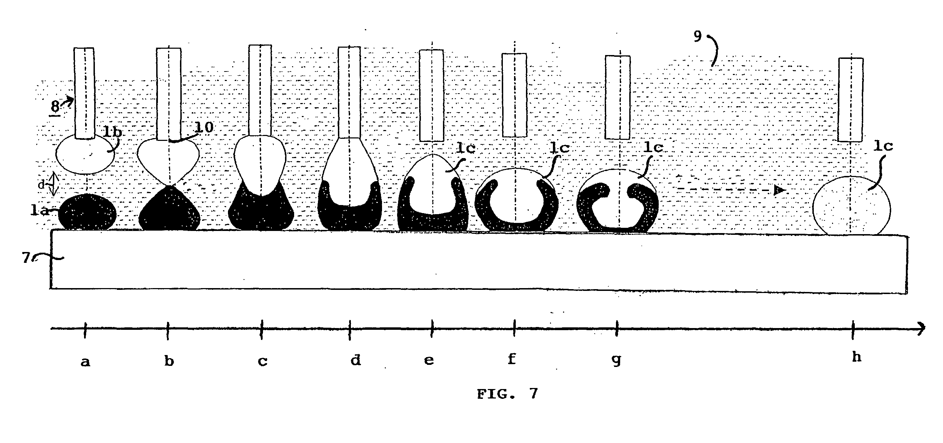

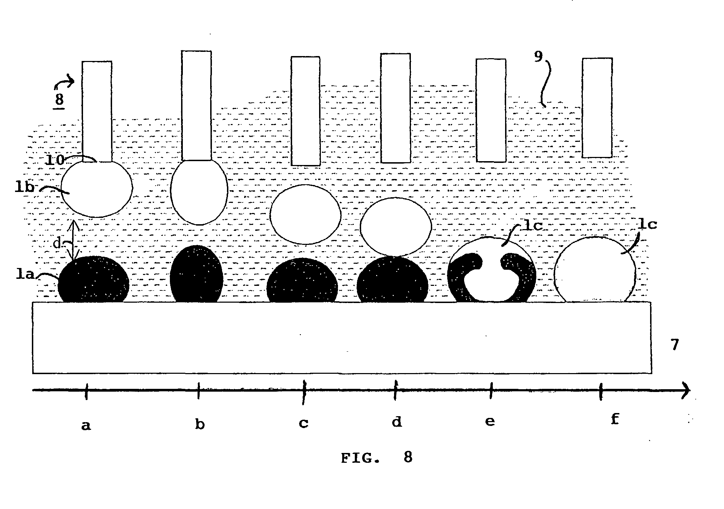

Les forces électrostatiques intervenant après la formation de la seconde goutte 1b, n'influencent pas le volume de celle-ci. Elles entraînent une attraction mutuelle des première et seconde gouttes 1a et 1b, se traduisant par le transfert de la seconde goutte 1b vers la première goutte 1a, avec une coalescence immédiate des deux gouttes (figures 7 et 8).

La figure 7, représente l'évolution temporelle du processus de mélange des première et seconde gouttes 1a et 1b dans un liquide visqueux 9, lorsque l'orifice de sortie 10 de l'injecteur 8 est disposé de telle manière que la distance d entre les première et seconde gouttes 1a et 1b soit inférieure ou égale au diamètre moyen de la seconde goutte, en considérant que la seconde goutte est sensiblement ronde lorsqu'elle se forme à l'orifice de sortie 10. Ainsi le diamètre moyen est de l'ordre du millimètre pour une goutte de 0,25µl. Le processus d'injection et de mélange des micro-gouttes 1a et 1b est représenté à différents instants a à h, le temps nécessaire pour d'un instant au suivant, entre les instants a et g étant de l'ordre de la milliseconde.

À l'instant a, les première et seconde gouttes sont éloignées d'une distance d inférieure ou égale au diamètre moyen des gouttes. Les forces électrostatiques appliquées après la formation de la seconde goutte 1b, déforment les première et seconde gouttes 1a et 1b, celles-ci s'attirant mutuellement comme représenté à l'instant b. Les deux gouttes présentent alors, à l'instant c, une forme conique, favorisant leur contact, contrairement au cas décrit à la figure 5 où apparaît une fossette s'opposant au phénomène de coalescence. Ainsi, les forces de rapprochement des deux gouttes 1a et 1b étant élastiques, elles déforment, par leur mode d'action, les interfaces des deux gouttes 1a et 1b de manière à supprimer l'existence de fossette, ce qui modifie favorablement le drainage du milieu. Le réactif de la seconde goutte 1b se déverse alors dans le réactif de la première goutte 1a, à l'instant d, le réactif de la seconde goutte 1b pénétrant au centre de la première goutte 1a, ce qui entraîne une circulation du réactif de la première goutte 1a à la périphérie de la nouvelle goutte en formation 1c (représenté à l'instant d).

La nouvelle goutte 1c se détache alors de l'injecteur avant que le réactif de la première goutte ne remonte au niveau de l'orifice de sortie 10 de l'injecteur 8 (représenté à l'instant e). Il n'y a donc pas de contact entre l'injecteur et le réactif de la première goutte 1a, évitant ainsi une éventuelle contamination. Un enroulement favorisant le mélange des deux réactifs se produit dans la nouvelle goutte 1c, à l'instant f. Après fusion, la nouvelle goutte 1c prend une forme définitivement ronde et le phénomène de diffusion naturelle assure le mélange des deux réactifs représenté à l'instant g et au bout de quelques secondes, le mélange est uniforme comme représenté à l'instant h.

Il est possible d'accélérer le processus de mélange en imposant une seconde impulsion de tension entre les première et seconde électrodes 17 et 18, pendant une seconde période de temps prédéterminée, de l'ordre de quelques millisecondes, par exemple. La seconde impulsion de tension est imposée de préférence à un temps correspondant à l'instant g. L'apparition de charges superficielles à l'interface de la nouvelle goutte 1c crée un écoulement à l'extérieur et à l'intérieur de la nouvelle goutte 1c. L'écoulement permet d'uniformiser le contenu de la nouvelle goutte 1c en quelques millisecondes à quelques secondes.

La figure 8, représente l'évolution temporelle du processus de mélange des première et seconde gouttes 1a et 1b dans un liquide visqueux 9, lorsque l'orifice de sortie 10 de l'injecteur 8 est disposé de manière à ce que la distance d soit supérieure au diamètre moyen de la seconde goutte 1b. Après la formation de la seconde goutte 1b, à l'instant a, une première impulsion de tension est appliquée entre les première et seconde électrodes, impliquant la déformation des première et seconde gouttes 1a et 1b, comme représenté à l'instant b. La seconde goutte 1b se détache alors de l'injecteur 8 (instant c) et tombe en chute libre dans le liquide visqueux 9 avant d'être en contact avec la première goutte 1a (instant d).

Le phénomène décrit à la figure 7 se reproduit alors, la seconde goutte 1b se déversant dans la première goutte 1a (instant e), ce qui entraîne une circulation du réactif de la première goutte 1a à la périphérie de la nouvelle goutte en formation 1c. Le phénomène de coalescence entre les première et seconde gouttes 1a et 1b est instantané et reproductible, la durée entre l'instant d et l'instant e étant seulement de 10 millisecondes. Le mélange est uniforme au bout de quelques secondes (instant f).

Comme décrit ci-dessus, une seconde impulsion de tension peut être appliquée pour accélérer le phénomène de mélange des réactifs des première et seconde gouttes 1a et 1b à l'intérieur de la nouvelle goutte 1c, par convection. La vitesse de la seconde goutte 1b pendant sa chute est de l'ordre de quelques mm/s à quelques cm/s. Dans ce cas, il n'y a aucun contact entre l'injecteur 8 et la première goutte 1a, et aucun risque de contamination de l'injecteur par le réactif de la première goutte 1a.

Le dispositif d'injection et de mélange selon l'invention présente l'avantage d'éviter l'apparition de fossette telle que celle décrite dans le mode de réalisation de la figure 5, la fossette ayant tendance à retarder voir à inhiber la coalescence en milieu liquide visqueux. Le dispositif permet également de contrôler efficacement le volume de seconde goutte 1b injecté, grâce à la pompe volumétrique, le volume étant indépendant de la tension appliquée, de la géométrie de l'injecteur et de la distance entre les deux électrodes. Le processus de mélange et d'injection est également reproductible, car les phénomènes hydrodynamiques ayant lieu sont eux-mêmes reproductibles.

Le dispositif ne présente pas non plus de risque de contamination de l'injecteur. Pour des processus de mélange et d'analyse critiques, dans le domaine du diagnostic médical par exemple, l'orifice de sortie 10 de l'injecteur 8 sera, de préférence, placé à une distance telle que la distance d soit supérieure au diamètre moyen de la seconde goutte, tandis que pour des processus moins critiques, l'injecteur peut être rapproché de la première goutte, sans crainte de contamination.

Selon un mode de réalisation particulier, représenté sur la figure 9, le support d'analyse7 est constitué d'un matériau isolant, tel qu'une céramique, du verre ou un polymère et est muni d'une zone électriquement conductrice formant la première électrode 17. La zone électriquement conductrice peut être réalisée par des techniques classiques de micro-technologie. Ainsi, par exemple, la seconde électrode 17 peut être réalisée par photolithographie sur une couche d'or. La couche électriquement isolante 14, sur laquelle est déposée la première goutte 1a, est, de préférence, en résine, en oxyde de silicium (SiO₂) ou en nitrure de silicium (Si₃N₄).

Sur la figure 9, l'injecteur 8, relié à la pompe volumétrique (non représentée), comporte, à son extrémité libre, un capillaire qui est de préférence un micro-tube en silice fondue, gainé de polyimide. L'orifice de sortie 10 de l'injecteur 8 est, de préférence, constitué par une des extrémités du capillaire, l'autre extrémité étant connectée à la pompe volumétrique. Le capillaire a un diamètre de l'ordre de quelques microns à quelques centaines de microns, le volume de la première et de la seconde gouttes étant de l'ordre de quelques dizaines de nanolitres à quelques centaines de nanolitres. Les première et seconde gouttes peuvent avoir des volumes différents, selon le mode d'injection choisi pour la première goutte.

La seconde électrode 18 entoure, de préférence, une partie des parois de l'injecteur 8 et peut être, notamment, constituée par un matériau électriquement conducteur, gainé sur les parois de l'injecteur 8.

Dans un mode particulier de réalisation, le capillaire constituant une partie de l'injecteur est enfilé dans un tube métallique constituant la seconde électrode, ce qui présente l'avantage d'être facile à mettre en oeuvre et d'être compatible avec un grand nombre de processus d'analyses biologiques et chimiques. En effet, la seconde électrode n'est jamais en contact avec les réactifs des première et seconde gouttes 1a et 1b, ce qui évite l'apparition de bulles d'air pouvant résulter des phénomènes d'électrolyse.

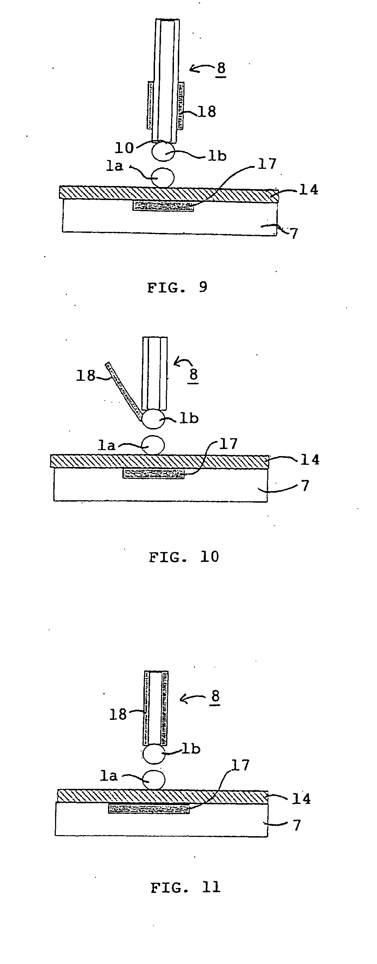

Selon un autre mode de réalisation représenté à la figure 10, la seconde électrode 18 est une aiguille métallique placée à proximité de l'orifice de sortie 10 de l'injecteur 8. L'aiguille métallique est, par exemple, un fil d'or, d'aluminium ou de platine. Elle peut être recouverte de Parylène®, c'est-à-dire un film polymère issu d'un dimère de type di-para-xylylène ou de Téflon@, pour éviter certains problèmes de biocompatibilité.

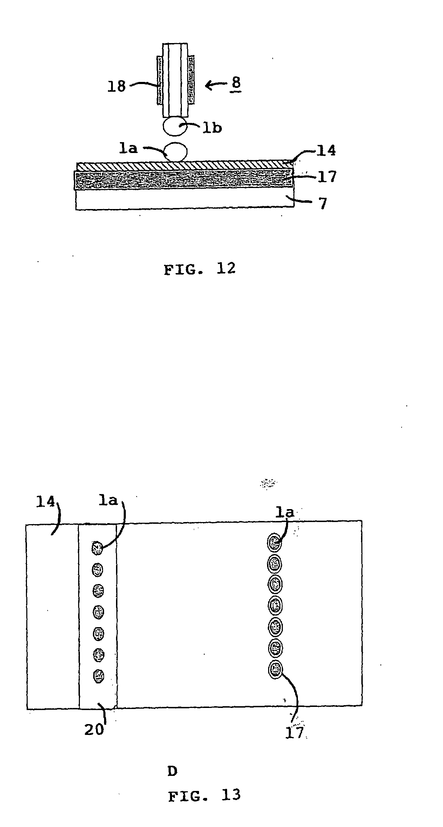

Sur la figure 11, l'injecteur 8 formé par un capillaire, est collé à un micro-tube conducteur formant la seconde électrode 18. Le micro-tube conducteur peut être en aluminium par exemple. Le capillaire formant l'injecteur peut également être recouvert d'une couche métallique par exemple de platine ou d'or.

Selon un autre mode de réalisation, représenté sur la figure 12, la première électrode 17 est constituée d'au moins une couche électriquement conductrice disposée entre le support d'analyse 7 isolant et la couche isolante 14.
Le dispositif d'injection et de mélange peut également comporter une pluralité d'injecteurs 8, afin d'injecter soit successivement une pluralité de secondes gouttes contenant des réactifs différents, dans une même première goutte, soit simultanément une pluralité de secondes gouttes, pouvant contenir un même réactif, dans une pluralité de premières gouttes pouvant contenir un même réactif. Ainsi, sur la figure 13, une rangée de sept premières gouttes 1a est disposée sur la couche électriquement isolante 14, de sorte que sept injecteurs 8, disposés au-dessus de chaque première goutte 1a, injectent chacun et simultanément une seconde goutte 1b dans chaque première goutte 1a.

Chaque injecteur comporte une seconde électrode 18. Dans une première variante, la première électrode 17 peut être commune aux sept premières gouttes 1a, c'est-à-dire qu'elle est formée par une zone électriquement conductrice constituée par une bande continue 20 disposée sous la rangée des premières gouttes 1a (partie gauche de la figure 13). Dans une autre variante, chaque première goutte 1a est disposée sur une première électrode 17, formée par une zone électriquement conductrice (partie gauche sur la figure 13).

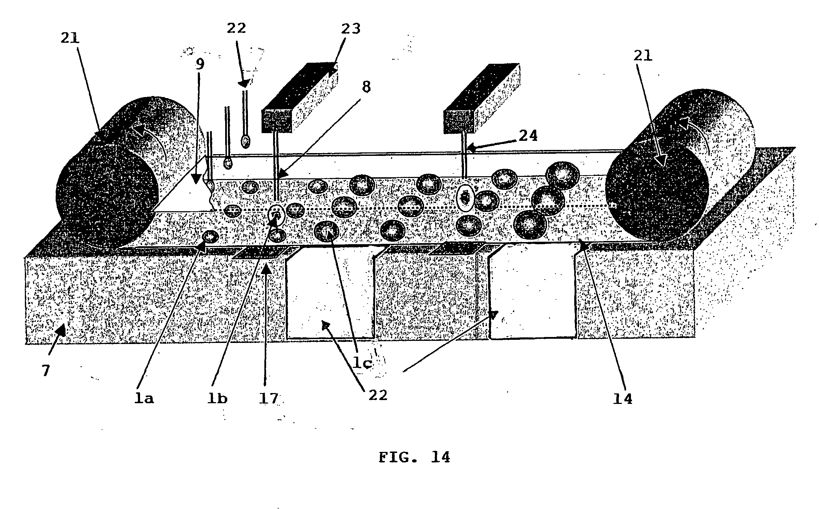

Selon un autre mode de réalisation particulier, comme représenté sur la figure 14, le dispositif d'injection et de mélange permet de réaliser un grand nombre de mélanges de réactifs en parallèle, ainsi que des traitements thermiques. Le support d'analyse 7 est recouvert d'une couche électriquement isolante 14, sur laquelle est déposée, par des capillaires 22, une rangée de premières gouttes 1a. Les capillaires 22 déposent, de préférence, sur la couche électriquement isolante 14, des premières gouttes 1a constituées par des réactifs différents.

La couche électriquement isolante 14 est, de préférence, un film souple, par exemple en polycarbonate d'une épaisseur de 50µm, le film étant recouvert par une couche d'huile 9. Le film isolant se déplace grâce à la rotation de deux bobines 21. Le support d'analyse 7 comporte, de préférence, des moyens de contrôle de la température situés à des emplacements prédéterminés 22, permettant d'appliquer différents traitements thermiques lors du passage des gouttes 1a et 1b sur ces emplacements.

Un injecteur 8 forme, au-dessus de chaque première goutte 1a une seconde goutte 1b comportant un réactif différent des réactifs des premières gouttes 1a. L'injecteur est fixé à un robot 23 qui assure le déplacement de l'injecteur 8 et lui permet de se positionner successivement au-dessus de chaque première goutte 1a de la rangée. Après la formation de la goutte 1b, une impulsion de tension est appliquée entre la première et la seconde électrode, pour favoriser le phénomène de coalescence et la formation d'une nouvelle goutte 1c. Comme représenté à la figure 13, la première électrode 17 peut être commune à la rangée de premières gouttes 1a ou être disposée sous chaque première goutte 1a de la rangée.

Il est alors possible de mélanger le réactif des secondes gouttes 1b avec chaque réactif de chaque première goutte 1a, sans contaminer l'injecteur avec les différents réactifs des premières gouttes 1a dans lesquelles l'injecteur a déjà injecté une seconde goutte 1b, ce qui présente l'avantage de ne pas avoir à rincer l'injecteur après chaque mélange.

Un second injecteur 24, du même type que l'injecteur 8, peut également être mis en place, de manière à mélanger un autre réactif à la rangée de nouvelles gouttes 1c formées. Le dispositif présente l'avantage de pouvoir accélérer ou ralentir le processus de mélange en fonction de la vitesse d'injection et de formation des secondes gouttes, de la vitesse de déplacement du film isolant 14 et de celle des injecteurs 8 et 24.

Les réactifs formant respectivement les premières et secondes gouttes peuvent, par exemple, contenir des molécules biologiques, comme de l'ADN, des protéines ou des organismes vivants.

## Revendications

1. Dispositif d'injection et de mélange de micro-gouttes liquides, comportant des moyens pour mélanger une seconde goutte (1b) avec une première goutte (1a) déposée sur un support d'analyse (7) sur lequel est déposé un liquide visqueux (9) dans lequel les première et seconde gouttes (1a, 1b) ne sont pas miscibles, le dispositif comportant au moins un injecteur (8) destiné à former, à un orifice de sortie (10), la seconde goutte (1b) au-dessus de la première goutte (1a), dispositif **caractérisé en ce que** le support d'analyse (7) comporte une couche électriquement isolante (14) sur laquelle est déposé le liquide visqueux et le dispositif comporte des moyens de contrôle d'une tension appliquée entre une première électrode (17), disposée sous ladite couche électriquement isolante (14) du support d'analyse (7), au-dessous de la première goutte (1a), et une seconde électrode (18) disposée à proximité de l'orifice de sortie (10) de l'injecteur (8).

2. Dispositif selon la revendication 1, **caractérisé en ce que** la seconde électrode (18) est une aiguille métallique.

3. Dispositif selon la revendication 1, **caractérisé en ce que** la seconde électrode (18) entoure une partie des parois de l'injecteur.

4. Dispositif selon la revendication 3, **caractérisé en ce que** l'injecteur (8) est gainé par un matériau électriquement conducteur, formant la seconde électrode (18).

5. Dispositif selon l'une quelconque des revendications 1 à 4, **caractérisé en ce que** l'injecteur (8) comporte à son extrémité libre un tube capillaire connecté à une pompe volumétrique (16).

6. Dispositif selon la revendication 5, **caractérisé en ce que** le tube capillaire est un micro-tube en silice fondue, gainé de polyimide.

7. Dispositif selon la revendication 1 à 6, **caractérisé en ce que** la couche électriquement isolante (14) du support d'analyse (7) est disposée sur un support électriquement isolant muni d'une zone électriquement conductrice formant la première électrode (17).

8. Dispositif selon la revendication 7, **caractérisé en ce que** ladite zone est constituée d'au moins une couche électriquement conductrice disposée entre la couche isolante (14) et le support (7) électriquement isolant.

9. Dispositif selon la revendication 7, **caractérisé en ce que** ladite zone est constituée par une bande (20) continue disposée sous une rangée de premières gouttes (1a).

10. Dispositif selon l'une quelconque des revendications 1 à 9, **caractérisé en ce que** la couche électriquement isolante (14) du support d'analyse (7) est mobile.

11. Dispositif selon l'une quelconque des revendications 1 à 10 **caractérisé en ce que** le dispositif comporte une pluralité d'injecteurs (8) disposés de manière à former simultanément des secondes gouttes (1b) au-dessus d'une rangée de premières gouttes (1a).

12. Dispositif selon l'une quelconque des revendications 1 à 10, **caractérisé en ce que** le dispositif comporte une pluralité d'injecteurs (8) disposés de manière à former successivement des secondes gouttes (1b).

13. Dispositif selon l'une quelconque des revendications 1à 12, **caractérisé en ce que** les moyens de contrôle comportent des moyens pour placer les première et seconde électrodes (17, 18) au même potentiel pendant la formation de la seconde goutte (1b) par l'injecteur (8), et des moyens pour appliquer, après formation de la seconde goutte (1b), une première impulsion de tension entre les première et seconde électrodes (17,18), pendant une première période de l'ordre de quelques millisecondes à une seconde.

14. Dispositif selon la revendication 13, **caractérisé en ce que** les moyens de contrôle comportent des moyens pour appliquer une seconde impulsion de tension entre les première et seconde électrodes (17, 18), pendant une seconde période de temps de l'ordre de quelques millisecondes à quelques secondes, suivant la première impulsion.

## Patentansprüche

1. Vorrichtung zum Einspritzen und Mischen flüssiger Mikrotröpfchen, die Mittel zum Vermischen eines zweiten Tropfens (1b) mit einem ersten Tropfen (1a) umfasst, der sich auf einem Analyseträger (7) befindet, auf den eine viskose Flüssigkeit (9) aufgebracht ist, in der der erste und der zweite Tropfen (1a, 1b) sich nicht vermischen können, wobei die Vorrichtung mindestens eine Einspritzeinrichtung (8) umfasst, die an einer Austrittsöffnung (10) den zweiten Tropfen (1b) über dem ersten Tropfen (1a) bilden soll,
eine Vorrichtung, die **dadurch gekennzeichnet ist, dass** der Analyseträger (7) eine elektrisch isolierende Schicht (14) umfasst, auf welche die viskose Flüssigkeit aufgebracht ist, und dass die Vorrichtung Kontrollmittel zur Kontrolle einer zwischen einer ersten Elektrode (17), die unter der elektrisch isolierenden Schicht (14) des Analyseträgers (7) unter dem ersten Tropfen (1a) angeordnet ist, und einer zweiten Elektrode (18), die nahe der Austrittsöffnung (10) der Einspritzeinrichtung (8) angeordnet ist, angelegten Spannung umfasst.

2. Vorrichtung nach Anspruch 1, **dadurch gekennzeichnet, dass** die zweite Elektrode (18) eine Metallnadel ist.

3. Vorrichtung nach Anspruch 1, **dadurch gekennzeichnet, dass** die zweite Elektrode (18) einen Teil der Wände der Einspritzeinrichtung umgibt.

4. Vorrichtung nach Anspruch 3,**dadurch gekennzeichnet, dass** die Einspritzeinrichtung (8) mit einem elektrisch leitenden Material umhüllt ist, das die zweite Elektrode (18) bildet.

5. Vorrichtung nach einem der Ansprüche 1 bis 4, **dadurch gekennzeichnet, dass** die Einspritzeinrichtung (8) an ihrem freien Ende ein Kapillarröhrchen aufweist, das an eine Zumesspumpe (16) angeschlossen ist.

6. Vorrichtung nach Anspruch 5, **dadurch gekennzeichnet, dass** das Kapillarröhrchen ein Mikrorohr aus mit Polyimid ummanteltem Quarzglas ist.

7. Vorrichtung nach Anspruch 1 bis 6, **dadurch gekennzeichnet, dass** die elektrisch isolierende Schicht (14) des Analyseträgers (7) auf einem elektrisch isolierenden Träger angeordnet ist, der mit einem elektrisch leitenden Bereich versehen ist, der die erste Elektrode (17) bildet.

8. Vorrichtung nach Anspruch 7, **dadurch gekennzeichnet, dass** der genannte Bereich aus mindestens einer elektrisch leitenden Schicht besteht, die zwischen der isolierenden Schicht (14) und dem elektrisch isolierenden Träger (7) angeordnet ist.

9. Vorrichtung nach Anspruch 7, **dadurch gekennzeichnet, dass** dieser Bereich aus einem durchgehenden Streifen (20) besteht, der unter einer Reihe erster Tropfen (1a) angeordnet ist.

10. Vorrichtung nach einem der Ansprüche 1 bis 9, **dadurch gekennzeichnet, dass** die elektrisch isolierende Schicht (14) des Analyseträgers (7) bewegbar ist.

11. Vorrichtung nach einem der Ansprüche 1 bis 10, **dadurch gekennzeichnet, dass** die Vorrichtung mehrere Einspritzeinrichtungen (8) aufweist, die so angeordnet sind, dass sie gleichzeitig zweite Tropfen (1b) über einer Reihe erster Tropfen (1a) bilden.

12. Vorrichtung nach einem der Ansprüche 1 bis 10, **dadurch gekennzeichnet, dass** die Vorrichtung mehrere Einspritzeinrichtungen (8) umfasst, die so angeordnet sind, dass sie nacheinander zweite Tropfen (1b) bilden.

13. Vorrichtung nach einem der Ansprüche 1 bis 12, **dadurch gekennzeichnet, dass** die Kontrollmittel Mittel umfassen, die ein Anlegen der ersten und zweiten Elektrode (17, 18) während der Bildung des zweiten Tropfens (1b) durch die Einspritzeinrichtung (8) an das gleiche Potenzial erlauben, sowie Mittel zum Anlegen eines ersten Spannungsimpulses, nach Bildung des zweiten Tropfens (1b), zwischen der ersten und zweiten Elektrode (17, 18), über einen ersten Zeitraum von einigen Millisekunden bis zu einer Sekunde.

14. Vorrichtung nach Anspruch 13,**dadurch gekennzeichnet, dass** die Kontrollmittel Mittel zum Anlegen eines zweiten Spannungsimpulses zwischen der ersten und zweiten Elektrode (17, 18) über einen zweiten Zeitraum, der einige Millisekunden bis einige Sekunden dauern kann, nach dem ersten Impuls umfassen.

## Claims

1. Device for injection and mixing of liquid micro-drops, comprising means for mixing a second drop (1b) with a first drop (1a) deposited on an analysis support (7) on which is deposited a viscous liquid (9) in which the first and second drops (1a, 1b) are not miscible, the device comprising at least one injector (8) designed to form, at an outlet orifice (10), the second drop (1b) above the first drop (1a),
device **characterized in that** the analysis support (7) comprises an electrically insulating layer (14) on which is deposited the viscous liquid and the device comprises control means for controlling a voltage applied between a first electrode (17), arranged under the electrically insulating layer (14) of the analysis support (7), underneath the first drop (1a), and a second electrode (18) arranged near to the outlet orifice (10) of the injector (8).

2. Device according to claim 1, **characterized in that** the second electrode (18) is a metal needle.

3. Device according to claim 1, **characterized in that** the second electrode (18) surrounds a part of the walls of the injector.

4. Device according to claim 3, **characterized in that** the injector (8) is sheathed by an electrically conducting material forming the second electrode (18).

5. Device according to any one of the claims 1 to 4, **characterized in that** the injector (8) comprises at its free end a capillary tube connected to a volumetric pump (16).

6. Device according to claim 5, **characterized in that** the capillary tube is a micro-tube made of fused silica, sheathed with polyimide.

7. Device according to claim 1 to 6, **characterized in that** the electrically insulating layer (14) of the analysis support (7) is arranged on an electrically insulating support provided with an electrically conducting zone forming the first electrode (17).

8. Device according to claim 7, **characterized in that** said zone is formed by at least one electrically conducting layer arranged between the insulating layer (14) and the electrically insulating support (7).

9. Device according to claim 7, **characterized in that** said zone is formed by a continuous strip (20) arranged under a row of first drops (1a).

10. Device according to any one of the claims 1 to 9, **characterized in that** the electrically insulating layer (14) of the analysis support (7) is mobile.

11. Device according to any one of the claims 1 to 10, **characterized in that** the device comprises a plurality of injectors (8) arranged so as to simultaneously form second drops (1b) above a row of first drops (1a).

12. Device according to any one of the claims 1 à 10, **characterized in that** the device comprises a plurality of injectors (8) arranged so as to successively form second drops (1b).

13. Device according to any one of the claims 1 to 12, **characterized in that** the control means comprise means for placing the first and second electrodes (17, 18) at the same potential during formation of the second drop (1b) by the injector (8), and means for applying, after formation of the second drop (1b), a first voltage impulse between the first and second electrodes (17,18) during a first time period of about a few milliseconds to one second.

14. Device according to claim 13, **characterized in that** the control means comprise means for applying a second voltage impulse between the first and second electrodes (17, 18) during a second time period of about a few milliseconds to a few seconds, after the first impulse.
